(19) Europäisches Patentamt
European Patent Office
Office européen des brevets

(11) **EP 2 226 653 B1**

(12) **EUROPÄISCHE PATENTSCHRIFT**

(45) Veröffentlichungstag und Bekanntmachung des Hinweises auf die Patenterteilung:
**03.10.2012  Patentblatt 2012/40**

(51) Int Cl.:
***G01V 8/10*** *(2006.01)*

(21) Anmeldenummer: **09100160.2**

(22) Anmeldetag: **02.03.2009**

(54) **Optoelektronischer Sensor**

Optoelectronic sensor

Capteur optoélectronique

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(43) Veröffentlichungstag der Anmeldung:
**08.09.2010  Patentblatt 2010/36**

(73) Patentinhaber: **SICK AG**
**79183 Waldkirch/Breisgau (DE)**

(72) Erfinder:
• **Klein, Michael**
**79183 Waldkirch (DE)**
• **Märkle, Christoph**
**79104 Freiburg (DE)**
• **Schindler, Bernhard**
**79263 Simonswald (DE)**

(74) Vertreter: **Ludewigt, Christoph**
**Sick AG**
**Intellectual Property**
**Erwin-Sick-Strasse 1**
**79183 Waldkirch (DE)**

(56) Entgegenhaltungen:
EP-A- 1 503 226          EP-A- 2 053 428
WO-A-97/26752          DE-A1-102007 050 096
US-A1- 2002 043 633

## Beschreibung

Die Erfindung betrifft einen optoelektronischen Sensor gemäß dem Oberbegriff des Anspruchs 1.

Aus der EP 1 503 226 A2 ist ein als Lichttaster ausgebildeter, optischer Sensor bekannt mit einem Sender zum Aussenden von Sendelicht, einem Empfänger zum Empfang von an einem Objekt reflektierten Sendelichts und einer Auswerteeinheit, in der das elektronische Signal des Empfängers ausgewertet und bei Detektion von reflektiertem Sendelicht an einem Objekt ein Objektfeststellungssignal ausgegeben wird. Um auch strukturierte Objekte detektieren zu können, bei denen aufgrund der Strukturen nur ein Teil der Sendelichtstrahlen zum Empfänger zurückreflektiert wird, ist nach der EP 1 503 226 A2 vorgesehen, dass die Sendelichtstrahlen mit einer lichtstreuenden Folie beispielsweise linienförmig aufgeweitet werden, so dass das zu detektierende Objekt großflächiger beleuchtet wird und bei vorhandenem Objekt eine ausreichende Reflektion zur Detektion zur Verfügung steht. Wird also ein Mindestmaß an reflektiertem Licht empfangen, kann der Empfänger dies ermitteln und es wird ein Objektfeststellungssignal ausgegeben. Die linienförmige Aufweitung des Sendelichts wird mittels einer lichtstreuenden und eine große Anzahl von Mikrolinsen aufweisenden Folie erreicht, die zwischen der Sendeoptik und einer Frontscheibe angeordnet ist.

Aus der DE 10 2007 050 096 A1 ist ein optischer Sensor bekannt, bei dem zur Homogenisierung des Lichtstrahls eine strukturierte Frontscheibe vorgesehen ist, deren Strukturen aus mehreren nebeneinander angeordneten optischen Elementen mit alternierenden Brennweiten gebildet sind. Nachteilig ist, dass eine derartige Frontscheibe nur sehr aufwändig und damit kostenaufwändig hergestellt werden kann.

Aus der EP 2 053 428 A1 ist ein optischer Sensor bekannt, in dessen Sendelichtstrahl eine Multilochblende vorgesehen ist, um den Sendelichtkegel einzuschränken.

Ausgehend von diesem Stand der Technik ist es Aufgabe der Erfindung, einen verbesserten optoelektronischen Sensor bereitzustellen, der kostengünstig ist und trotzdem ein senkrecht zur Sendestrahlrichtung ausgedehntes Sendelicht von hoher Qualität erzeugt.

Diese Aufgabe wird gelöst durch einen optoelektronischen Sensor mit den Merkmalen des Anspruchs 1.

Ein solcher optoelektronischer Sensor weist einen Sender, zum Aussenden eines Sendelichtbündels, das senkrecht zur Sendestrahlrichtung mittels einer Sendeoptik ausgedehnt (etwa linienförmig) ausgebildet ist, einem Empfänger zum Empfang von Empfangslicht und zum Bereitstellen eines elektronischen Empfangssignals, einer Auswerteeinheit zum Aufnehmen des Empfangssignals und Ausgeben eines Objektdetektionssignals, wobei zumindest der Sender und die Sendeoptik in einem eine Frontscheibe aufweisenden Sensorgehäuse angeordnet sind. Erfindungsgemäß ist die Frontscheibe in dem Bereich, durch den das Sendelicht tritt oder in einem Bereich, durch den das Empfangslicht tritt, mit Mustern aus lichtabsorbierendem Material zur Lichtintensitätshomogenisierung belegt, so dass möglichst über die gesamte Linie quer zur Richtung, in der das Sendelicht ausgesandt wird, gleiche Lichtintensität vorliegt.

Die Frontscheibe weist damit keinerlei Änderungen in ihrer Struktur auf und kann somit kostengünstig bleiben. Die Homogenisierung des Sendelichtbündels oder Empfangslichtbündels wird ausschließlich durch das Muster aus Licht absorbierendem Material erreicht, indem das Licht in den Bereichen, in denen die Frontscheibe dichter mit dem Licht absorbierendem Material belegt ist, stärker absorbiert wird als in den Bereichen, in denen weniger oder gar kein Licht absorbierendes Material vorhanden ist. Eine solche Belegung der Frontscheibe kann sehr kostengünstig ausgeführt sein, vorzugsweise durch Bedrucken.

Durch die Verwendung einer Stufenlinse kann der durch die optischen Randbedingungen erforderliche Bauraum (Abstand zwischen Sender bzw. Empfänger und zugeordneter Optik) reduziert werden.

Wenn Sender, Empfänger und Auswerteeinheit gemeinsam in dem Sensorgehäuse angeordnet sind und der Bereich der Frontscheibe, durch den das Sendelicht tritt, nicht mit den Mustern belegt ist, kann der Sensor kompakt ausgebildet sein und das Sendelicht in voller Stärke auf ein mögliches Objekt treffen, wodurch der Sendelichtstrahl verbessert sichtbar ist, beispielsweise zu Ausrichtzwecken.

Im Folgenden wird die Erfindung anhand eines Ausführungsbeispieles unter Bezugnahme auf die Zeichnung im Einzelnen erläutert. In der Zeichnung zeigen:

Fig. 1 und 2    eine schematische Darstellung des erfindungsgemäßen Sensors in einer Anwendung aus zwei verschiedenen Richtungen gesehen;

Fig. 3 und 4    Strahlprofile des Sendelichts;

Fig. 5    eine schematische Darstellung einer Ausführungsform einer Frontscheibe;

Fig. 6    ein schematisches Diagramm des zeitlichen Verlaufs des Empfangssignals zur Darstellung der Funktionsweise des erfindungsgemäßen Sensors.

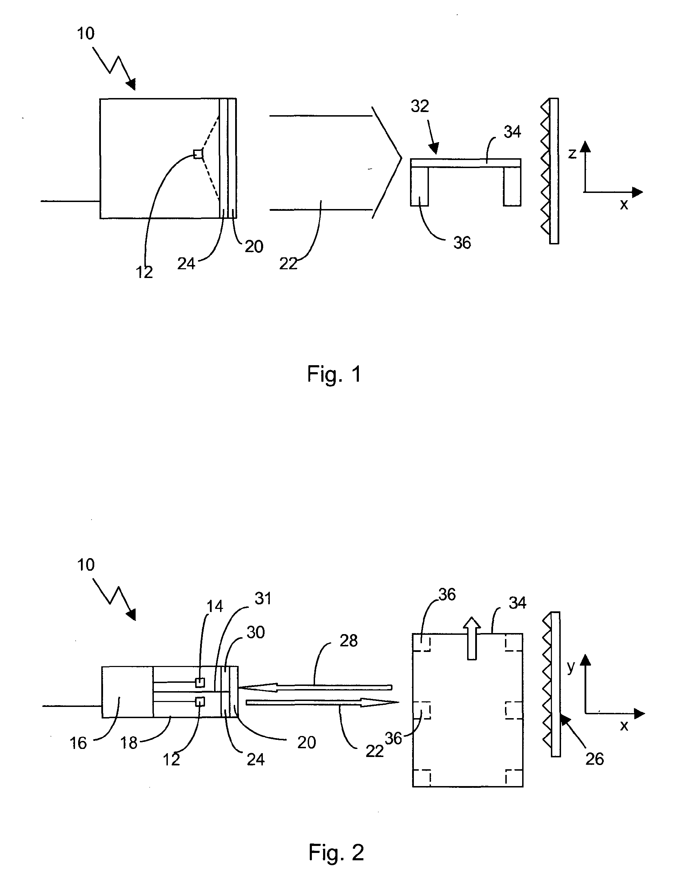

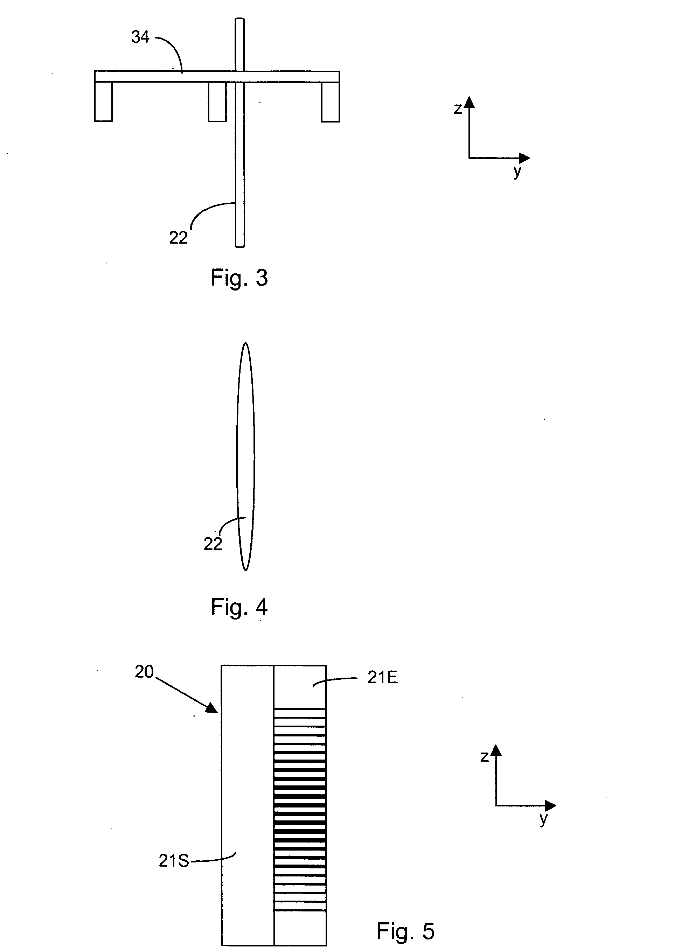

Ein erfindungsgemäßer Sensor 10 ist als Lichtschranke ausgebildet und beispielhaft als Reflexionslichtschranke in den Fig. 1 und 2 dargestellt. Der Sensor 10 weist einen Sender 12, einen beispielsweise als Photodiode ausgebildeten Empfänger 14 und eine Auswerteeinheit 16 auf. Sender 12, Empfänger 14 und Auswerteeinheit 16 sind in einem gemeinsamen Sensorgehäuse 18 angeordnet, das frontseitig mit einer Frontscheibe 20 abgedeckt ist. Das vom Sensor 12 ausgesandte Sendelicht 22 wird von einer dem Sender 12 zugeordneten Sendeoptik 24 etwa linienförmig aufgeweitet, so dass das den Sensor verlassende Sendelicht 22 ein etwa linienförmiges Sendelichtprofil aufweist, wie beispielsweise in den Fig. 3 und 4 dargestellt ist. Gemäß Fig. 3 ist das Sendelicht im Querschnitt nahezu rechteckförmig, wobei es sich um ein sehr schmales Rechteck handelt, um die Linienform zu erhalten. Das Sendelichtprofil nach Fig. 4 ist linienförmig durch eine in die Länge gezogene Ellipsenform gebildet. Die das Sendelichtprofil formende Sendeoptik 24 kann beispielsweise als Stufenlinse ausgebildet sein, wodurch der Abstand zwischen Sender 12 und Sendeoptik 24 zur Bauraumreduzierung minimal gehalten werden kann.

Die Linienform des Sendelichts 22 ist ebenfalls in den Fig. 1 und 2 zu erkennen, wobei in der Perspektive der Fig. 1 das Sendelicht 22 sehr schmal ist und in der Perspektive der Fig. 2 sehr breit, so dass das Sendelicht also in z-Richtung und somit quer zur Richtung, in der das Sendelicht ausgesandt wird, linienförmig ausgebildet ist.

Bei freiem Strahlengang trifft das Sendelicht 22 auf einen Retroreflektor 26 und wird von diesem in gleiche Richtung zurückreflektiert zum Sensor 10 und dort als Empfangslicht 28 vom Empfänger 14, dem eine Empfängeroptik 30 vorgeordnet ist, empfangen. Die Empfängeroptik 30 bündelt das ebenfalls linienförmige Empfangslicht 28 auf den als Photodiode ausgebildeten Empfänger 14.

Damit kein direktes optisches Übersprechen innerhalb des Gehäuses vom Sender zum Empfänger erfolgt, ist bevorzugt eine optische Trennwand 31 vorgesehen, die im Sensorgehäuse 18 Sende- und Empfangskanal trennt. Im Empfänger 14 wird das Empfangslicht in ein elektronisches Empfangssignal umgewandelt, das von der Auswerteeinheit 16 aufgenommen wird. In der Auswerteeinheit wird das Empfangssignal daraufhin ausgewertet, ob im Sendelicht 22 ein opakes Objekt vorhanden ist oder nicht und gegebenenfalls ein Detektionssignal ausgegeben.

In dem Ausführungsbeispiel nach den Fig. 1 und 2 dient der erfindungsgemäße Sensor 10 zur Detektion von Paletten 32. Eine Palette 32 weist einen Palettenboden 34 und Palettenfüße 36 auf. Der optoelektronische Sensor 10 ist nun derart ausgerichtet, dass die Sendelichtlinie senkrecht zum Palettenboden 34 verläuft, so dass bei Transport der Palette 32 in y-Richtung der Palettenboden 34 durch das Sendelicht 22 transportiert wird (siehe auch Fig. 3).

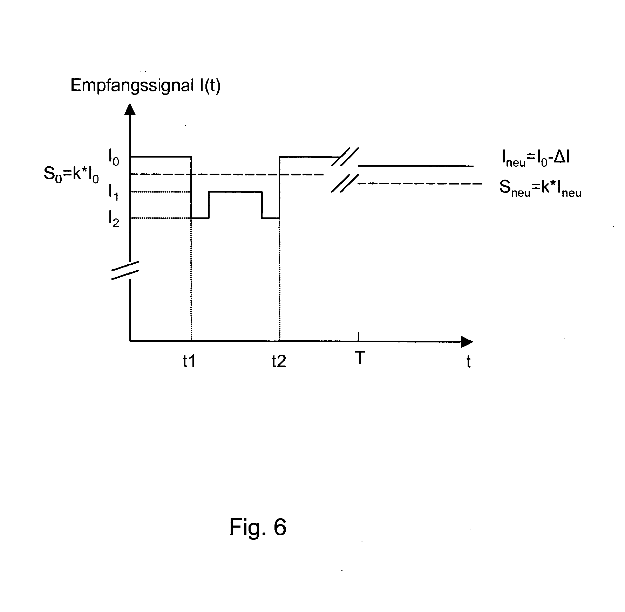

Da der Palettenboden 34 im Vergleich zur Ausdehnung des Sendelichts 22 in z-Richtung eine relativ kleine Ausdehnung hat, unterbricht er das Sendelicht nur abschnittsweise, so dass immer ein Großteil des Sendelichts den Reflektor 26 erreicht und in den Empfänger 14 zurückreflektiert wird. Eine besondere Aufgabe des erfindungsgemäßen Sensors ist es daher, eine relativ geringe Intensitätsänderung zu erkennen und möglichst zuverlässig und sicher ein Detektionssignal auszugeben, wenn eine Palette 32 sich mit zumindest einem Palettenfuß 36 in dem Strahlengang befindet. Dazu arbeitet der Sensor 10 wie unter Bezugnahme auf Fig. 6 im Folgenden erläutert:

Zu Beginn wird zunächst bei freiem Strahlengang die empfangene Intensität am Empfänger 14 ermittelt und das entsprechende elektronische Empfangssignal $I_0$ gespeichert. Danach wird in der Auswerteeinheit 16 ein Erkennungs-Schwellwert $S_0$ festgelegt, der einem festgelegten Prozentsatz des Empfangssignals bei freiem Strahlengang entspricht.

$$S_0 = k * I_0 \quad \text{mit } k < 1$$

Dieser Erkennungs-Schwellwert $S_0$ muss aber höher liegen als ein Empfangssignal $I_1$, das der empfangenen Intensität entspricht, wenn zumindest der Palettenboden 34 sich im Strahlengang des Sendelichts 22 befindet, beispielsweise in der Zeit zwischen t1 und t2. Dann ist gewährleistet, dass bei Unterschreiten des Erkennungs-Schwellwertes $S_0$ eine Palette vorhanden ist. Dies gilt selbst verständlich auch, wenn ein Palettenfuß 36 in den Strahlengang eintreten sollte, da das dann empfangene Signal $I_2$ noch kleiner ist als das Empfangssignal $I_1$ bei nur dem Palettenboden 34 im Sendelicht 22.

Nach Ablauf einer bestimmten Zeit T, dies können beispielsweise mehrere Sekunden oder sogar Minuten oder Stunden sein, wird das Empfangssignal $I_{neu}$ bei freiem Strahlengang, also ohne Paletten, automatisch erneut ermittelt und der bisherige, in der Auswerteeinheit 16 abgespeicherte Wert für $I_0$ überschrieben. Ausgehend von diesem neuen Empfangssignal $I_{neu}$ bei freiem Strahlengang wird ein neuer Erkennungs-Schwellwert $S_{neu}$ mit dem gleichen Prozentsatz errechnet und als neuer Erkennungs-Schwellwert $S_{neu}$ abgespeichert.

$$S_{neu} = k * I_{neu}$$

Mit diesem neuen Erkennungs-Schwellwert $S_{neu}$ wird weitergearbeitet, bis nach erneutem Zeitablauf wieder ein neuer Erkennungs-Schwellwert auf gleiche Weise bestimmt wird. Auf diese Weise wird der Erkennungs-Schwellwert immer wieder nachgeführt. Wenn das Zeitintervall T sehr kurz ist, beispielsweise Sekunden, ist die Nachführung sogar quasi kontinuierlich.

Wie bereits oben erläutert, ist in den Fig. 3 und 4 jeweils ein Sendelichtprofil im Querschnitt schematisch dargestellt. Damit die Erkennung eines sich im Strahlengang 22 befindlichen Palettenbodens 34 unabhängig vom Ort des Auftretens des Palettenbodens 34 ist, sollte das Empfangssignal $I_1$ unabhängig sein von der x- und z-Position.

Um die Unabhängigkeit in z-Richtung, also entlang der Sendelichtlinie, zu gewährleisten, sollte das Sendelicht homogen sein, was hohe Anforderungen an die Sendeoptik stellt. Diese lassen sich aber reduzieren, wenn die Homogenisierung auf andere Weise bewerkstelligt werden kann. Dazu ist erfindungsgemäß vorgesehen, dass die Frontscheibe 20 in dem Bereich 21S, durch den das Sendelicht 22 durch die Frontscheibe 20 tritt oder in dem Bereich 21E, durch den das Empfangslicht 28 durch die Frontscheibe 20 tritt, mit Mustern 40 aus lichtabsorbierendem Material belegt ist. Bevorzugt ist das Material durch Bedrucken auf die Frontscheibe 20 aufgebracht. Damit wird letztendlich das vom Sensor ausgesandte Sendelicht 22 bzw. Empfangslicht 28 in verschiedenen Bereichen der Frontscheibe unterschiedlich stark durch Absorption an dem Material gedämpft, so dass letztendlich eine Homogenisierung der Lichtintensität in z-Richtung erreicht wird. Eine Bedruckung nur des empfängerseitigen Bereichs 21 E ist vorteilhaft, da dann das Sendelicht mit voller Lichtstärke austritt und Reflektionen des Sendelichts an einem Objekt, z.B. dem Palettenboden 34, mit bloßem Auge zu Justagezwecken leichter erkannt werden können. Die Muster 40 zum Bedrucken der Frontscheibe können in verschiedenster Art und Weise ausgebildet sein. In Fig. 5 ist beispielhaft ein Streifenmuster 40 dargestellt, das in z-Richtung das Empfangslicht zentral mehr dämpft als zu den Rändern oben und unten hin.

Die Unabhängigkeit in x-Richtung wird dadurch gewährleistet, dass das vom Sensor 10 ausgesandte Sendelicht 22 durch die Sendeoptik 24 parallel ausgerichtet ist.

Insgesamt ist damit ein optoelektronischer Sensor geschaffen, mit dem ein Objekt detektiert werden kann, wenn es sich in dem durch den Sendelichtstrahlengang 22 spezifizierten, in z-Richtung ausgedehnten Detektionsbereich befindet, wobei das opake Objekt eine bestimmte Mindestabdeckung des Sendelichts verursachen muss, damit das Empfangssignal zur Detektion unter eine vorgegebene Schwelle fällt.

**Patentansprüche**

1. Optoelektronischer Sensor mit einem Sender (12), zum Aussenden eines Sendelichtbündels (22), das senkrecht zu einer Sendestrahlrichtung mittels einer Sendeoptik (24) linienförmig ausgedehnt ist, einem Empfänger (14) zum Empfang von Empfangslicht (28) und zum Bereitstellen eines elektronischen Empfangssignals, einer Auswerteeinheit (16) zum Aufnehmen des Empfangssignals und Ausgeben eines Objektdetektionssignals, wobei zumindest der Sender (12) und die Sendeoptik (24) in einem eine Frontscheibe (20) aufweisenden Sensorgehäuse (18) angeordnet sind, **dadurch gekennzeichnet, dass** die Frontscheibe (20) in einem Bereich (21 S), durch den das Sendelicht (22) und/oder in einem Bereich (21 E), durch den das Empfangslicht (28) tritt, mit Mustern (40) aus lichtabsorbierendem Material zur Lichtintensitätshomogenisierung belegt ist, wobei dass Licht in verschiedenen Bereichen der Frontscheibe (20) unterschiedlich stark durch Absorption an dem Material gedämpft wird.

2. Sensor nach Anspruch 1, **dadurch gekennzeichnet, dass** die Frontscheibe (20) bedruckt ist.

3. Sensor nach einem der vorhergehenden Ansprüche, **dadurch gekennzeichnet, dass** die Sendeoptik (24) eine Stufenlinse aufweist.

4. Sensor nach einem der vorhergehenden Ansprüche, **dadurch gekennzeichnet, dass** Sender (12), Empfänger (14) und Auswerteeinheit (16) gemeinsam in dem Sensorgehäuse (18) angeordnet sind und der Bereich (21 S) der Frontscheibe (20), durch den das Sendelicht (28) tritt, nicht mit den Mustern belegt ist.

**Claims**

1. Optoelectronic sensor having a transmitter (12) for the transmission of a transmitted light beam (22) which is extended linearly and perpendicular to a transmitted beam direction by means of an optical transmission system (24), a receiver (14) for the reception of received light (28) and for the provision of an electronic received signal and an evaluation unit (16) for the recording of the received signal and for the outputting of an object detection signal, wherein at least the transmitter (12) and the optical transmission system (24) are arranged in a sensor housing (18) having a front screen (20), **characterized in that** the front screen (20) is overlaid with patterns (40) of light absorbing material for light intensity homogenization in a region (21 S) through which the transmitted light (22) passes and/or in a region (21 E) through which the received light (28) passes.

2. Sensor in accordance with claim 1, **characterized in that** the front screen (20) is printed.

3. Sensor in accordance with any preceding claim, **characterized in that** the optical transmission system (24) has a Fresnel lens.

4. Sensor in accordance with any preceding claim, **characterized in that** the transmitter (12), the receiver (14) and the evaluation unit (16) are arranged together in the sensor housing (18) and the region (21 S) of the front screen (20) through which the transmitted light (28) passes is not overlaid with the patterns.

**Revendications**

1. Capteur opto-électronique comportant un émetteur (12) pour la transmission d'un faisceau lumineux transmis (22) qui se prolonge linéairement et perpendiculairement à une direction du faisceau transmis au moyen d'un système de transmission optique (24), un récepteur (14) pour la réception de la lumière reçue (28) et pour la fourniture d'un signal électronique reçu et une unité d'évaluation (16) pour l'enregistrement du signal reçu et pour l'émission d'un signal de détection d'objet, dans lequel au moins l'émetteur (12) et le système de transmission optique (24) sont disposés dans un boîtier de capteur (18) ayant une vitre avant (20), **caractérisé en ce que** la vitre avant (20) est recouverte avec des motifs (40) de matériau absorbant la lumière pour la homogénéisation de l'intensité lumineuse dans une région (21S) au travers laquelle la lumière transmise (22) passe et/ou dans une région (21 E) au travers laquelle la lumière reçue (28) passe.

2. Capteur selon la revendication 1, **caractérisé en ce que** la vitre avant (20) est imprimée.

3. Capteur selon l'une des revendications précédentes, **caractérisé en ce que** le système de transmission optique (24) présente une lentille de Fresnel.

4. Capteur selon l'une des revendications précédentes, **caractérisé en ce que** l'émetteur (12), le récepteur (14) et l'unité d'évaluation (16) sont disposés ensemble dans le boîtier de capteur (18) et la région (21 S) de la vitre avant (20) au travers laquelle la lumière transmise (28) passe n'est pas recouverte par les motifs.

Fig. 1

Fig. 2

Fig. 3

Fig. 4

Fig. 5

Empfangssignal I(t)

$S_0 = k \cdot I_0$

$I_0$

$I_1$

$I_2$

$I_{neu} = I_0 - \Delta I$

$S_{neu} = k \cdot I_{neu}$

t1          t2          T          t

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1503226 A2
- DE 102007050096 A1
- EP 2053428 A1